# EUROPÄISCHE PATENTSCHRIFT

(11) **EP 0 591 351 B1**
(45) Veröffentlichungstag und Bekanntmachung des Hinweises auf die Patenterteilung: **25.08.1999**
(21) Anmeldenummer: 92913605.9
(22) Anmeldetag: 29.06.1992
(51) Int. Cl.: H02K 5/173, H02K 1/18

(54) **PLATTENSPEICHER**
HARD DISK
DISQUE DUR

(30) Priorität: 28.06.1991 DE 4121428
(43) Veröffentlichungstag der Anmeldung: 13.04.1994
(73) Patentinhaber: Papst Licensing GmbH & Co. KG, 78549 Spaichingen (DE)
(72) Erfinder: HANS, Helmut, D-78112 St. Georgen (DE); OELSCH, Jürgen, D-78112 St. Georgen (DE)
(74) Vertreter: Henkel, Feiler, Hänzel
(86) Internationale Anmeldenummer: EP9201457
(87) Internationale Veröffentlichungsnummer: WO9300734

(56) Entgegenhaltungen:
- EP-A- 0 402 240
- DE-A- 3 818 994
- FR-A- 965 860
- GB-A- 996 919
- GB-A- 2 202 386

## Beschreibung

Die Erfindung betrifft einen Plattenspeicher mit den Merkmalen des Oberbegriffs des Anspruchs 1 bzw. des Anspruchs 5.

Ein Spindelmotor für Plattenspeicher dieser Art ist bereits aus der DE-OS 38 18 994 bekannt. Bei dem dort beschriebenen Plattenspeicherantrieb (siehe insbesondere Fig. 3, 5 und 6) ist der ringförmige Eisenrückschluß topfförmig ausgebildet, wobei der obere Abschnitt mit geringerem Innendurchmesser mittels eines Kugellagers direkt auf einer sog. "feststehenden Welle oder Achse" gelagert ist, während der untere Abschnitt mit größerem Durchmesser unter Verwendung eines Distanzringes auf einem auf der Welle sitzenden Kugellager gelagert ist. Eine Verringerung des Durchmessers des ringförmigen Eisenrückschlusses auch im unteren Bereich zur Vermeidung des Distanzringes ist nicht möglich, weil dann eine Montage des Spindelmotors, insbesondere des feststehenden Innenstators, nicht möglich ist. Diese durch den Distanzring zusätzlich vorhandenen Fügestellen führen jedoch zu einem unruhigen und unpräzisen Lauf der Antriebsnabe, was insbesondere bei Plattenspeichern mit großer Speicherdichte zu Problemen führt. Als Lauffehler kommen insbesondere "non-repeatable-run-out"- und "thermal-run-out"-Fehler in Frage.

Die EP-A-0 402 240 offenbart einen Elektromotor, bei dem die beiden Kugellager direkt zwischen den sich drehenden Elementen angeordnet sind. Der Außenstator dieses Elektromotors ist mit den entsprechenden Erregerwicklungen ausgestattet.

Der vorliegenden Erfindung liegt die Aufgabe zugrunde, einen Plattenspeicher zu schaffen, insbesondere für hohe Aufzeichnungsdichte, bei dem Ungenauigkeiten im Lauf vermindert und die Präzision des Spindelmotors erhöht ist. Dabei wird gleichzeitig eine hohe Standzeit der Lager des Spindelmotors angestrebt.

Diese Aufgabe wird gemäß der Erfindung durch Schaffung eines Plattenspeichers gemäß Anspruch 1 oder Anspruch 5 gelöst.

Die Erfindung geht von der Erkenntnis aus, daß der gesamte Spindelmotor einen einheitlichen Materialaufbau, bestehend aus feststehender Welle bzw. Achse, Kugellager und Eisenrückschluß, haben muß, wobei die Anzahl der Fügestellen zu minimieren ist. Hierbei muß jedoch beachtet werden, daß der Spindelmotor unter Einhaltung hoher Präzision noch montagegerecht konstruiert sein muß.

Die Erfindung bringt einen Plattenspeicher in Vorschlag, mit einem Gehäuse und einem durch eine feststehende Welle in dem Gehäuse befestigten Außenläufer-Spindelmotor, dessen Hauptkomponenten im Inneren oder unterhalb einer Antriebsnabe, auf der Speicherplatten befestigt sind, angeordnet und zum Gehäuse hin durch geeignete Dichtungen abgedichtet sind, wobei der Außenläufer-Spindelmotor umfaßt: einen an der Welle befestigten Innenstator, zwei beiderseits des Innenstators angeordnete Kugellager und einen mittels der Kugellager auf der Welle gelagerten permanentmagnetischen Außenrotor mit einem ringförmigen magnetischen Eisenrückschluß, wobei der Außenrotor stirnseitig verlängerte erste und zweite axiale Abschnitte aufweist, an denen die Kugellager gelagert sind, und der Außenrotor die Antriebsnabe trägt oder bildet, dadurch gekennzeichnet, daß zur Minimierung der Anzahl der Fügestellen die beiden Kugellager direkt aber montagegerecht zwischen der Welle und dem Eisenrückschluß oder der Antriebsnabe angeordnet sind, wobei der Eisenrückschluß kannenförmig mit einer Verengung am zweiten stirnseitig verlängerten Abschnitt des Außenrotors ausgebildet ist, an der eines der beiden Kugellager direkt zwischen der Verengung und der Welle angeordnet ist und daß das am ersten stirnseitig verlängerten Abschnitt des Außenrotors angeordnete Kugellager einen größeren Innendurchmesser aufweist als das am zweiten stirnseitig verlängerten Abschnitt des Außenrotors angeordnete Kugellager.

Durch diesen Aufbau ist eine einfache Montage möglich. Gleichzeitig erhöht die Vergrößerung des (unteren) Kugellagers den virtuellen Lagerabstand des Spindelmotors, was zu einer höheren Tragkraft und/oder Verlängerung der Lebensdauer führt oder eine geringer Vorspannung der Lager bei gleicher Steifigkeit zuläßt bzw. mit gleicher Vorspannung der Lager eine höhere Steifigkeit erreicht wird.

Der in einer bevorzugten Ausgestaltung an der feststehenden Welle angeformte Bund ist vorzugsweise in der Form eines Wellenflansches ausgebildet, was die Befestigungsmöglichkeiten der Welle verbessert. Bei einer solchen Lösung werden die Anschlußdrähte des Außenläufermotors vorzugsweise durch eine Bohrung in dem Bund am ersten Ende der Antriebsnabe herausgeführt. Dies vermeidet eine Schwächung der feststehenden Welle durch Bohrungen zwecks Hindurchführung der Anschlußdrähte, wie es bei dem Stand der Technik der Fall war. Außerdem erleichtert es die Montage der Anschlußdrähte.

Des weiteren bringt die Erfindung auch einen Plattenspeicher in Vorschlag mit einem Gehäuse und einem durch eine feststehende Welle in dem Gehäuse befestigten Außenläufer-Spindelmotor, dessen Hauptkomponenten im Inneren oder unterhalb einer Antriebsnabe, auf der Speicherplatten befestigt sind, angeordnet und zum Gehäuse hin durch geeignete Dichtungen abgedichtet sind, wobei der Außenläufer-Spindelmotor umfaßt: einen an der Welle befestigten Innenstator, zwei beiderseits des Innenstators angeordnete Kugellager und einen mittels der Kugellager auf der Welle gelagerten permanentmagnetischen Außenrotor mit einem ringförmigen magnetischen Eisenrückschluß, wobei der Außenrotor stirnseitig verlängerte erste und zweite axiale Abschnitte aufweist, an denen die Kugellager gelagert sind, und der Außenrotor die Antriebsnabe trägt oder bildet, dadurch gekennzeichnet, daß zur Minimierung der Anzahl der Fügestellen die beiden Kugellager direkt aber montagegerecht zwischen der Welle und dem Eisenrückschluß oder der Antriebsnabe angeordnet sind, und wobei der Innenstator aus mindestens zwei Segmenten zusammengesetzt ist, die in radialer Richtung in einen im Durchmesser verminderten Abschnitt der Welle eingesetzt und, z.B. durch Kleben, befestigt sind.

Diese Art der radialen Montage des in Segmenten aufgeteilten Innenstators ermöglicht eine Freiheit der Außendurchmesser der feststehenden Welle, um auf diese Weise zur Minimierung der Anzahl der Fügestellen die beiden Kugellager direkt zwischen der feststehenden Welle und dem Eisenrückschluß unterzubringen. Die geteilte Ausbildung des Stators und Verklebung der einzelnen Sektoren und mit der Welle hat den weiteren Vorteil, daß sich hierdurch, bei geeignetem Kleber, eine weitere Schwingungsdämpfung der Gesamtanordnung ergibt.

Zur weiteren Verminderung der Anzahl der Fügestellen ist es auch möglich, daß der Innenring mindestens eines der Kugellager durch die feststehende Welle (bzw. dem daraus angeformten Bund) und/oder der Außenring mindestens eines der Kugellager durch den Eisenrückschluß integral gebildet sind, d.h., daß in diesem Teilen die entsprechenden Kugellaufbahnen gebildet sind.

Anwendbar ist die Erfindung auf Spindelmotoren beliebiger Art, also z.B. mit Wechselstrommotoren oder Gleichstrommotoren. Vorzugsweise sind solche Spindelmotoren jedoch mit einem Außenläufermotor in Form eines bürstenlosen Gleichstrommotors mit permanentmagnetischem Außenrotor ausgestattet.

Die Erfindung wird nachfolgend anhand mehrerer Ausführungsbeispiele unter Bezug auf die beigefügten Zeichnungen erläutert. In den Zeichnungen zeigen die linken und rechten Hälften teilweise unterschiedliche Lösungen, was durch den Zusatz "a" und "b" gekennzeichnet ist.

Es zeigen:
- Fig. 1a: einen Spindelmotor bekannter Bauart;
- Fig. 1b: eine erste Ausführungsform der Erfindung;
- Fig. 2: eine zweite Ausführungsform der Erfindung;
- Fig. 3a und 4a: in den jeweils linken Hälften die gleiche Ausführungsform wie in Fig. 2;
- Fig. 3b: eine dritte Ausführungsform der Erfindung;
- Fig. 4b: eine vierte Ausführungsform der Erfindung;
- Fig. 5: einen Sektor eines geteilten Innenstators in schematischer Darstellung in Endansicht; und
- Fig. 6a und 6b: eine fünfte und eine sechste Ausführungsform der Erfindung.

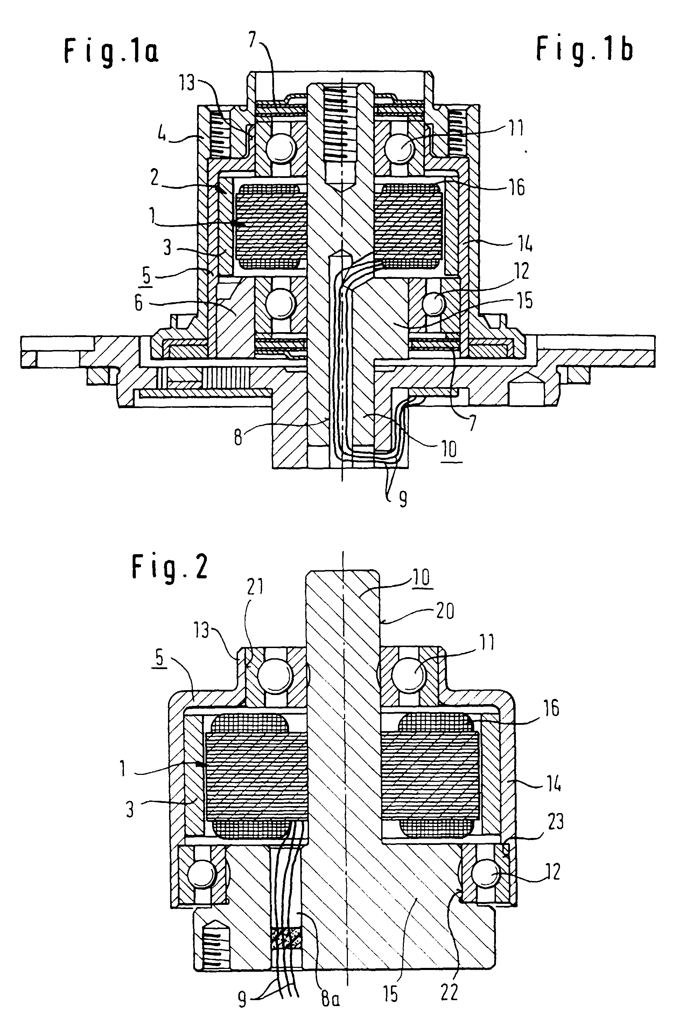

Zunächst soll der Stand der Technik anhand der Fig. 1a (linke Hälfte der Zeichnung) erläutert werden, wobei jedoch auf ähnliche Teile im rechten Teil der Zeichnung (Fig. 1b), der ein ersten Ausführungsbeispiel der Erfindung zeigt, herangezogen werden.

Auf einer (in der Zeichnung) senkrecht stehenden, festen Welle 10 ist ein Innenstator 1 befestigt, der Erregerwicklungen 16 aufweist. Der gesamte Spindelmotor wird durch die feststehende Welle 10 mittels Flanschteile (wie in den Fig. 1a und 1b gezeigt) in einem Gehäuse eines Plattenspeichers o.dgl. befestigt. Außerhalb des Innenstators 1 ist ein Außenrotor 2 vorgesehen, der im wesentlichen aus Rotormagneten und einem Eisenrückschluß 5 besteht. Außerhalb des Eisenrückschlusses 5 ist eine Antriebsnabe 4 befestigt, auf die im Falle eines Plattenspeichers Speicherplatten gelagert werden. Es ist jedoch auch möglich, die Antriebsnabe durch den ringförmigen Eisenrückschluß 5 selbst zu bilden.

Der ringförmige Eisenrückschluß 5 ist, wie in Fig. 1a gezeigt, kannenförmig ausgebildet mit einem oberen Abschnitt 13 kleineren Durchmessers in der Form einer Verengung und einem unteren Abschnitt 14 größeren Durchmessers. In diesem unteren Abschnitt 14 sind auch die Rotormagnete 3 befestigt. Der obere Abschnitt 13 ist mittels eines ersten Kugellagers 11 direkt auf dem Außendurchmesser der feststehenden Welle 10 gelagert, während der untere Abschnitt 14 außerhalb des Innenstators 1 unter Zwischenfügung eines Distanzringes 6 mittels eines zweiten Lagers 12 auf der feststehenden Welle 10 gelagert ist (linke Hälfte der Zeichnung, Fig. 1a). Die Teile des Motors einschließlich der beiden Kugellager 11 und 12 sind durch geeignete Dichtungen 7, hier Magnetfluid-Dichtungen, nach außen hin abgedichtet. Darüber hinaus sind die Anschlußdrähte 9 auf einer Zentralbohrung 8 im Inneren der Welle herausgeführt. Nachfolgend soll die erste Ausführungsform der Erfindung anhand des rechten Teils der Zeichnung, nämlich Fig. 1b, erläutert werden. Die obere Lagerung des Eisenrückschlusses 5 bzw. der Antriebsnabe 4 ist ebenso ausgebildet wie in der linken Hälfte nach Fig. 1a; ebenso der Aufbau des Innenstators 1 und des Außenrotors 2. Im unteren Bereich ist an der feststehenden Welle 10 jedoch ein Bund 15 mit größerem Durchmesser als die Welle 10 angeformt, auf der ein Kugellager 12 mit größerem Durchmesser angeordnet ist. Dieses Kugellager 12 stützt den unteren Abschnitt 14 des Eisenrückschlusses 5 direkt, also ohne Distanzring, ab. Auf diese Weise ist also eine Fügestelle weniger vorhanden und die Konstruktion ist in Richtung einheitlicher Materialaufbau verbessert, was zu einer größeren Laufruhe des Spindelmotors führt. Außerdem wird wegen des Wegfalls des Distanzringes 6 (Fig. 1a) die träge Masse des Rotors vermindert, es erfolgt eine Erhöhung der Resonanzfrequenzen durch höhere Steifigkeit der Lagerung und schließlich bedeutet das größere Lager eine höhere Tragfähigkeit und geringeren Verschleiß.

Fig. 2 zeigt einen ähnlichen Aufbau wie Fig. 1b, jedoch ist hier der Bund 15 in Form eines Wellenflansches ausgebildet, was eine einfachere Befestigung des Spindelmotors ermöglicht und die Steifigkeit des Systems erhöht. Teile mit den gleichen Bezugsziffern ähneln denen nach Fig. 1b, so daß sie nicht erneut beschrieben werden. Der Übersichtlichkeit halber ist die Antriebsnabe 4 in Fig. 2 nicht gezeigt, sie kann jedoch - wie bereits ausgeführt - durch den äußeren Umfang des Eisenrückschlusses 5 gebildet werden. Die Ausbildung des Bundes 15 als Wellenflansch ermöglicht es, auf eine zentrale Bohrung in der feststehenden Welle 10 zu verzichten und statt dessen eine entsprechende Bohrung 8a seitlich im Bund 15 vorzusehen, aus der dann die Anschlußdrähte 9 herausgeführt werden können. Hierdurch wird die Welle 10 nicht geschwächt.

In Fig. 2 ist auch im Detail zu sehen, wie das obere Kugellager 11 direkt zwischen dem Außendurchmesser 20 der Welle 10 und dem Innendurchmesser 21 des oberen Abschnittes 13 des Eisenrückschlusses 5 angeordnet ist, während das untere Kugellager 12 direkt zwischen dem vergrößerten Durchmesser 22 des Bundes 15 und dem Innendurchmesser 23 im unteren Abschnitt des Eisenrückschlusses 5 angeordnet ist, so daß sich ein Minimum der Anzahl der Fügestellen in der mechanischen Lagerung des Eisenrückschlusses 5 auf der Welle 10 ergibt.

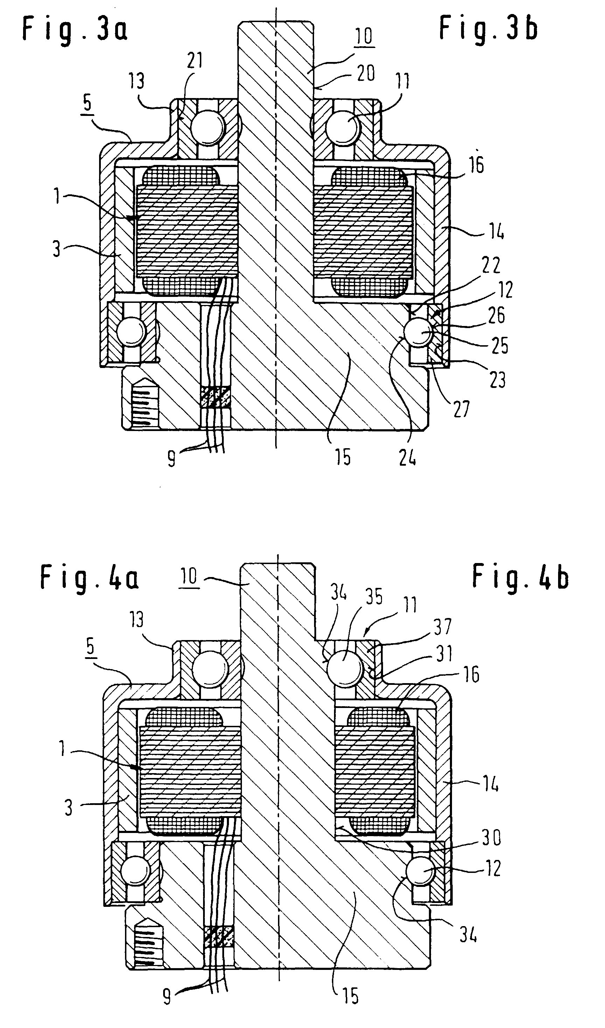

Nachfolgend soll nun eine Variante der Ausführungsform nach Fig. 2 anhand der Fig. 3b beschrieben werden. Die linke Hälfte mit der Fig. 3a dieser Zeichnung entspricht der linken Hälfte nach Fig. 2. Die Ausführungsform nach Fig. 3b unterscheidet sich von der nach Fig. 2 dadurch, daß das untere Kugellager 12 teilweise in den Bund 15 integriert ist, d.h., daß die innere Kugellaufbahn 24 in den äußeren Durchmesser 22 des Bundes 15 eingearbeitet ist. Die Kugeln 25 des unteren Kugellagers 12 laufen also zwischen dieser eingearbeiteten Kugel laufbahn 24 und einer entsprechenden Kugel laufbahn 26 im äußeren Kugellagerring 27.

Eine weitere Ausführungsform nach Fig. 4b unterscheidet sich von der nach Fig. 3b dadurch, daß auch das obere Kugellager 11 teilweise in die stehende Welle 10 bzw. in einen entsprechenden Ansatz mit einem Außendurchmesser 30 integriert ist. In die Außenfläche 30 der Welle 10 ist eine Kugellaufbahn 34 integriert. Zwischen dieser Kugellaufbahn 34 und der entsprechenden Kugellaufbahn eines äußeren Kugellagerringes 37 laufen die Kugeln 35. Der äußere Kugellagerring 37 ist in eine Innenbohrung 31 des oberen Abschnittes 13 des Eisenrückschlusses 5 eingesetzt. Die linke Hälfte der Zeichnung, nämlich Fig. 4a, entspricht den linken Darstellungen in den Fig. 2 und 3a.

Auch wenn die Kugellaufbahnen 24 bzw. 34 (Fig. 3b und 4b) nur auf der Innenseite, also auf der Welle 10 bzw. dem Bund 15, eingearbeitet sind, während die äußere Seite äußere Kugellaufringe 27 bzw. 37 aufweist, so ist es theoretisch auch denkbar, auf den äußeren Kugellagerring zu verzichten und entsprechende Kugellaufbahnen direkt an den entsprechenden Abschnitten des Eisenrückschlusses 5 anzuordnen. In diesem Fall müssen die Oberflächen an diesen Stellen des Eisenrückschlusses jedoch entsprechend gehärtet werden, was unter Umständen ungünstig für die magnetischen Eigenschaften ist. Darüber hinaus muß das Ganze natürlich montagegerecht konstruiert sein.

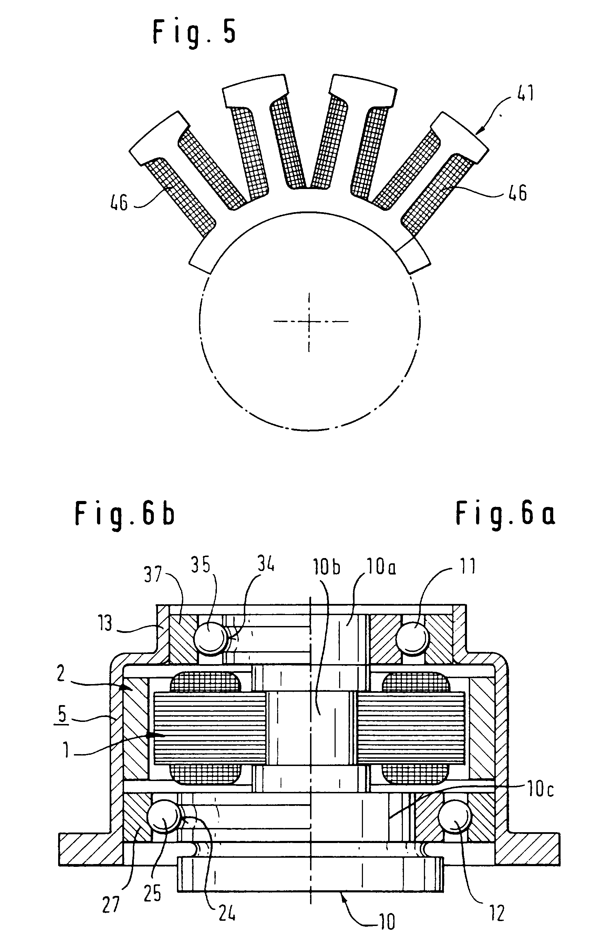

Um in der Konstruktion mehr Freiheitsgrade zu haben, also die entsprechenden Abschnitte der stehenden Welle 10 entsprechend den Erfordernissen der Lagerung weitgehend frei wählen zu können, wird gemäß der Erfindung vorgeschlagen, den Innenstator 1 nicht im ganzen zu fertigen und axial auf die Welle 10 aufzuschieben, sondern aus mehreren Segmenten 41, mindestens zwei Segmenten, zusammenzusetzen, so daß eine radiale Montage erfolgen kann. Ein solches Segment 41 mit Erregerwicklungen 46 zeigt Fig. 5 in schematischer Form. Hierin ist auch zu sehen, daß das geblechte Statorsegment für ein verschachteltes Zusammensetzen ausgebildet ist, um die magnetischen Übergänge zu verbessern. Es ist jedoch auch denkbar, bei genauer Fertigung die einzelnen Statorsegmente 41 stumpf aneinanderstoßen zu lassen. Die Teil-Erregerwicklungen 46 auf den Statorsegmenten 41 werden nach der Montage entsprechend miteinander verschaltet.

Die Fig. 6a und 6b zeigen nun, wie unter Anwendung eines geteilten Innenstators nach Fig. 5 ein anderer Aufbau mit mehr Freiheitsgraden möglich ist. Es ist zu sehen, daß die feststehende Welle 10 drei Abschnitte 10a, 10b und 10c mit unterschiedlichen Außendurchmessern aufweist, wobei der mittlere Abschnitt 10b den geringsten Durchmesser hat und die Segmente 41 des Innenstators 1 aufnimmt. Hierdurch ist es möglich, die Durchmessersprünge des Eisenrückschlusses 5 bzw. der Antriebsnabe geringer auszubilden, so daß sich weitgehend gleiche Größen für das obere Kugellager 11 und das untere Kugellager 12 ergeben. Eine solche Konstruktion hat also eine bessere Symmetrie, so daß sich eine niedrigere Wärmeempfindlichkeit für die Lagerung ergibt.

In Fig. 6a (rechter Teil der Zeichnung) sind die beiden Kugellager 11 und 12 als konventionelle Lager ausgebildet, d.h. sie enthalten einen inneren und einen äußeren Kugellagerring, die zwischen der Welle 10 und dem Eisenrückschluß 5 direkt angeordnet sind. Fig. 6b (linke Hälfte der Zeichnung) zeigt jedoch ähnlich wie bei dem Ausführungsbeispiel nach Fig. 4b, daß die Kugellager 11 und 12 teilweise in der Welle 10 integriert sind, d.h., daß entsprechende Kugellaufbahnen 24 und 34 in entsprechende Abschnitte 10c und 10a der Welle 10 eingearbeitet sind. Die gegenüberliegenden Kugellaufbahnen für die Kugeln 25, 35 befinden sich in entsprechenden äußeren Kugellagerringen 27, 37.

## Patentansprüche

1. Plattenspeicher mit einem Gehäuse und einem durch eine feststehende Welle (10) in dem Gehäuse befestigten Außenläufer-Spindelmotor, dessen Hauptkomponenten im Inneren oder unterhalb einer Antriebsnabe (4), auf der Speicherplatten befestigt sind, angeordnet und zum Gehäuse hin durch geeignete Dichtungen (7) abgedichtet sind,
wobei der Außenläufer-Spindelmotor umfaßt:
einen an der Welle (10) befestigten Innenstator (1),
zwei beiderseits des Innenstators (1) angeordnete Kugellager (11,12) und
einen mittels der Kugellager (11,12) auf der Welle (10) gelagerten permanentmagnetischen Außenrotor (2) mit einem ringförmigen magnetischen Eisenrückschluß (5), wobei der Außenrotor stirnseitig verlängerte erste und zweite axiale Abschnitte aufweist, an denen die Kugellager (11,12) gelagert sind, und der Außenrotor (2) die Antriebsnabe (4) trägt oder bildet,
dadurch gekennzeichnet, daß
zur Minimierung der Anzahl der Fügestellen die beiden Kugellager (11,12) direkt aber montagegerecht zwischen der Welle (10) und dem Eisenrückschluß (5) oder der Antriebsnabe (4) angeordnet sind, wobei
der Eisenrückschluß (5) kannenförmig mit einer Verengung (13) am zweiten stirnseitig verlängerten Abschnitt des Außenrotors (2) ausgebildet ist, an der eines (11) der beiden Kugellager (11,12) direkt zwischen der Verengung (13) und der Welle (10) angeordnet ist und
daß das am ersten stirnseitig verlängerten Abschnitt des Außenrotors (2) angeordnete Kugellager (12) einen größeren Innendurchmesser aufweist als das am zweiten stirnseitig verlängerten Abschnitt des Außenrotors (2) angeordnete Kugellager (11).

2. Plattenspeicher nach Anspruch 1, dadurch gekennzeichnet, daß die Welle (10) mit einem einstückig angeformten Bund (15) versehen ist und das andere Kugellager (12) direkt zwischen dem Bund und einem Abschnitt des Eisenrückschlusses (5) am ersten stirnseitig verlängerten Abschnitt des Außenrotors (2) angeordnet ist.

3. Plattenspeicher nach Anspruch 2, dadurch gekennzeichnet, daß der Bund (15) in der Form eines Flansches ausgebildet ist, über den die Welle (10) am Gehäuse befestigt ist.

4. Plattenspeicher nach Anspruch 2 oder 3, dadurch gekennzeichnet, daß Anschlußdrähte (9) des Außenläufer-Spindelmotors durch eine Bohrung (8a) in dem Bund (15) zum Innenstator (1) geführt sind.

5. Plattenspeicher mit einem Gehäuse und einem durch eine feststehende Welle (10) in dem Gehäuse befestigten Außenläufer-Spindelmotor, dessen Hauptkomponenten im Inneren oder unterhalb einer Antriebsnabe (4), auf der Speicherplatten befestigt sind, angeordnet und zum Gehäuse hin durch geeignete Dichtungen (7) abgedichtet sind,
wobei der Außenläufer-Spindelmotor umfaßt:
einen an der Welle (10) befestigten Innenstator (1),
zwei beiderseits des Innenstators (1) angeordnete Kugellager (11,12) und
einen mittels der Kugellager (11,12) auf der Welle (10) gelagerten permanentmagnetischen Außenrotor (2) mit einem ringförmigen magnetischen Eisenrückschluß (5), wobei der Außenrotor stirnseitig verlängerte erste und zweite axiale Abschnitte aufweist, an denen die Kugellager (11,12) gelagert sind, und der Außenrotor (2) die Antriebsnabe (4) trägt oder bildet,
dadurch gekennzeichnet, daß
zur Minimierung der Anzahl der Fügestellen die beiden Kugellager (11,12) direkt aber montagegerecht zwischen der Welle (10) und dem Eisenrückschluß (5) oder der Antriebsnabe (4) angeordnet sind, und
wobei der Innenstator (1) aus mindestens zwei Segmenten (41) zusammengesetzt ist, die in radialer Richtung in einen im Durchmesser verminderten Abschnitt (10b) der Welle (10) eingesetzt und, z.B. durch Kleben, befestigt sind.

6. Plattenspeicher nach Anspruch 5, dadurch gekennzeichnet, daß die Welle (10) mit Abschnitten (10a,10b,10c) unterschiedlichen Außendurchmessers versehen ist, auf denen die Kugellager (11,12) und der Innenstator (1) angeordnet sind.

7. Plattenspeicher nach einem der Ansprüche 1 bis 6, dadurch gekennzeichnet, daß ein Innenring mindestens eines der Kugellager (11,12) durch die Welle (10) bzw. den daran angeformten Bund (15) bzw. den Abschnitt unterschiedlichen Außendurchmessers (10a,10c) und/oder ein Außenring mindestens eines der Kugellager (11,12) durch den Eisenrückschluß (5) gebildet sind, indem in diesen Teilen die entsprechenden Kugellaufbahnen (24,34) ausgebildet sind.

## Claims

1. Disc memory drive comprising a housing and an external rotor spindle motor secured within the housing by a fixed shaft (10), the main components of said motor being provided in the interior of or below a driving hub (4) on which storage discs are mounted, and being sealed to the housing by appropriate sealings (7),
said external rotor spindle motor comprising:
an internal stator (1) secured to said shaft (10),
two ball bearings (11,12) arranged on either side of the internal stator (1) and
a permanent-magnetic external rotor (2) supported on said shaft (10) by means of said ball bearings (11,12) and having an annular magnetic back iron (5), the external rotor having first and second axial sections extended at their end faces on which the ball bearings (11,12) are supported, and said external rotor (2) carrying or forming said driving hub (4),
characterized in that,
in order to minimize the number of joints, both ball bearings (11,12) are arranged directly, yet correctly as far as assembly is concerned, between the shaft (10) and the back iron (5) or the driving hub (4),
said back iron (5) being of can-shaped form with a narrowed portion (13) at the second section of the external rotor (2), extended at its end face, on which one (11) of the two ball bearings (11,12) is directly arranged between the narrowed portion (13) and the shaft (10), and that
the ball bearing (12) arranged at the first section of the external rotor (2) extended at its end face has a larger inner diameter than the ball bearing (11) arranged at the second section of the external rotor (2) extended at its end face.

2. Disc memory drive according to claim 1, characterized in that said shaft (10) is provided with an integrally formed collar (15) and that the other ball bearing (12) is directly arranged between the collar and a portion of the back iron (5) at the first section of the external rotor (2) extended at its end face.

3. Disc memory drive according to claim 2, characterized in that the collar (15) is formed in the shape of a flange by means of which said shaft (10) is attached to the housing.

4. Disc memory drive according to claim 2 or 3, characterized in that connecting wires (9) of the external rotor spindle motor are brought out through a bore (8a) in the collar (15) to the internal stator (1).

5. Disc memory drive comprising a housing and an external rotor spindle motor secured within the housing by a fixed shaft (10), the main components of said motor being provided in the interior of or below a driving hub (4) on which storage discs are mounted, said main components being sealed to the housing by appropriate sealings (7),
said external rotor spindle motor comprising:
an internal stator (1) secured to said shaft (10),
a pair of ball bearings (11,12) arranged on either side of the internal stator (1) and
a permanent-magnetic external rotor (2) supported on said shaft (10) by means of said ball bearings (11,12) and having an annular magnetic back iron (5), the external rotor having first and second axial sections extended at their end faces on which the ball bearings (11,12) are supported, and said external rotor (2) carrying or forming said driving hub (4),
characterized in that,
in order to minimize the number of joints, both ball bearings (11,12) are arranged directly, yet correctly as far as assembly is concerned, between the shaft (10) and the back iron (5) or the driving hub (4), and
the internal stator (11) is composed of at least two segments (41) which are inserted radially into a reduced diameter section (10b) of said shaft (10) and which are fixed, for example, by glueing.

6. Disc memory drive according to claim 5, characterized in that the shaft (10) is provided with sections (10a,10b,10c) of different external diameters on which said ball bearings (11,12) and said internal stator (1) are arranged.

7. Disc memory drive according to one of claims 1 to 6, characterized in that an inner ring of at least one of said ball bearings (11,12) is formed by the shaft (10) or the integral collar (15) thereof or by the section of different external diameter (10a,10c), and/or an outer ring of at least one of said ball bearings (11,12) is formed by said back iron (5), i.e. that the corresponding ball races (24,34) are formed in these parts.

## Revendications

1. Mémoire à disque comportant un boîtier et un moteur à tige avec un rotor externe fixé dans le boîtier au moyen d'un arbre fixe (10), les composants principales dudit moteur étant prévus à l'intérieur ou au-dessous d'un moyeu d'entraînement (4) sur lequel des disques de mémorisation sont montés, et étant étanchéifiés par rapport au boîtier par des joints (7) appropriés,
ledit moteur à tige avec un rotor externe comportant:
un stator interne (1) fixé audit arbre (10),
deux roulements à billes (11,12) disposés de chaque côté dudit stator interne (1),
un rotor externe à aimant permanent (2) monté sur ledit arbre (10) par l'intermédiaire desdits roulements à billes (11,12) et contenant un fer magnétique annulaire de retour (5), ledit rotor externe contenant des première et seconde sections axiales étendues sur leurs côtés frontales et recevant lesdits roulements à billes (11,12), ledit rotor externe (2) portant ou formant le moyeu d'entraînement (4),
caractérisé en ce que,
afin de minimiser le nombre de joints, les deux roulements à billes (11,12) sont agencés directement mais correctement en ce qui concerne leur montage, entre ledit arbre (10) et ledit fer de retour (5) ou ledit moyeu d'entraînement (4),
ledit fer de retour (5) présantant une forme de pot ou de godet, avec un rétrécissement (13) sur la seconde section dudit rotor externe (2), étendue sur son côté frontal, l'un (11) desdits roulements à billes (11,12) étant disposé directement entre le rétrécissement (13) et l'arbre (10), et que
le roulement à billes (12) disposé à la première section dudit rotor externe (2), étendue sur son côté frontal, présente un diamètre interieur qui est plus grand que celui du roulement à billes (11) disposé sur la seconde section dudit rotor externe (2), étendue sur son côté frontal.

2. Mémoire à disque selon la revendication 1, caractérisé en ce que ledit arbre (10) est pourvu d'un collet (15) intégralement formé, et que l'autre desdits roulements à billes (12) est directement agencé entre ledit collet et une partie dudit fer annulaire de retour (5) dans la première section dudit rotor externe (2), étendue sur son côté frontal.

3. Mémoire à disque selon la revendication 2, caractérisé en ce que ledit collet (15) présente la forme d'une bride au moyen de laquelle ledit arbre (10) est fixé au boîtier.

4. Mémoire à disque selon la revendication 2, caractérisé en ce que des fils de raccordement (9) dudit moteur à tige avec rotor externe sont reliés à travers un alésage (8a) dans le collet (15) audit stator interne (1).

5. Mémoire à disque comportant un boîtier et un moteur à tige avec un rotor externe fixé dans le boîtier au moyen d'un arbre fixe (10), les composants principales dudit moteur étant prévus à l'intérieur ou au-dessous d'un moyeu d'entraînement (4) sur lequel des disques de mémorisation sont montés, et étant étanchéifiés par rapport au boîtier par des joints (7) appropriés,
ledit moteur à tige avec un rotor externe comportant:
un stator interne (1) fixé audit arbre (10),
deux roulements à billes (11,12) disposés de chaque côté dudit stator interne (1),
un rotor externe à aimant permanent (2) monté sur ledit arbre (10) par l'intermédiaire desdits roulements à billes (11,12) et contenant un fer annulaire de retour (5), ledit rotor externe contenant des première et seconde sections axiales étendues sur leurs côtés frontales et recevant lesdits roulements à billes (11,12), ledit rotor externe (2) portant ou formant le moyeu d'entraînement (4),
caractérisé en ce que,
afin de minimiser le nombre de joints, les deux roulements à billes (11,12) sont agencés directement mais correctement en ce qui concerne leur montage, entre ledit arbre (10) et ledit fer de retour (5) ou ledit moyeu d'entraînement (4),
ledit stator interne (10) étant composé d'au moins deux segments (41) insérés en direction radiale dans une section (10b) à diamètre réduit dudit arbre (10) et étant fixés, par exemple, par adhésion au moyen de colle.

6. Mémoire à disque selon la revendication 5, caractérisé en ce que ledit arbre (10) est pourvu de sections (10a,10b,10c) de diamètres externes différents sur lesquelles lesdits roulements à billes (11,12) ainsi que ledit stator interne (1) sont disposés.

7. Mémoire à disque selon l'une des revendications 1 à 6, caractérisé en ce qu'une bague interne d'au moins un desdits roulements à billes (11,12) est formé par l'arbre (10) ou par le collet (15) formé sur celui-ci ou par la section de diamètre différent (10a,10c), et/ou qu'une bague externe d'au moins un desdits roulements à billes (11,12) est formé par ledit fer annulaire de retour (5), les chemins de roulement (24,34) correspondants étant formés sur ces parties.
